# EUROPEAN PATENT SPECIFICATION

(11) **EP 3 205 893 B1**
(45) Date of publication and mention of the grant of the patent: **01.01.2020**
(21) Application number: 17155819.0
(22) Date of filing: 13.02.2017
(51) Int. Cl.: F16B 3/04

(54) **TIGHTENING SYSTEM FOR ANNULAR MEMBERS**
BEFESTIGUNGSSYSTEM FÜR RINGELEMENTE
SYSTÈME DE FIXATION POUR MEMBRES ANNULAIRES

(30) Priority: 11.02.2016 IT UB20160689
(43) Date of publication of application: 16.08.2017
(73) Proprietor: Fluiten Italia S.p.A., 20154 Milano (IT)
(72) Inventor: COLOMBO, Alberto Delfo, 27045 Casteggio (Pavia) (IT)
(74) Representative: Inchingalo, Simona

(56) References cited:
- EP-A2- 2 740 945
- DE-A1-102009 025 554
- GB-A- 2 325 277

## Description

The present invention relates to a system for tightening annular elements to a central cylindrical body.

Specifically, the present invention is useful in all those cases in which two members having a circular cross section, which must be fitted one on the other, need to be linked together, to prevent any relative mutual movement.

This invention finds particular, but not exclusive use in the field of mechanical seals for securing a sealing ring to a static or rotating central shaft.

The techniques for fastening an annular element or ring to a central cylindrical body or shaft are manifold. Generally, grains are used, which are inserted radially inside the annular element, until the head of the grain abuts against the outer surface of the cylindrical central body. As a result of the friction generated, the annular element is stably fixed in a precise axial position along the central cylindrical body. With this type of constraint, the annular member can be driven in rotation by the drive shaft without causing relative rotation between the two components. However, this constraint can have some drawbacks mostly linked to the radial deformation that can occur in the annular element as a result of the tightening of the grains.

In fact, if only one grain is used, the annular element may show ovalization phenomena. In order to overcome this drawback it is preferable to use two or more grains. In this case, it is advisable to carry out a stellar assembly, to distribute and balance the efforts between several grains.

In addition to the grains, clamping elements and screws may be used, which, due to static friction, make the annular element integral with the shaft, thereby giving them the ability to transmit a torque and to absorb an axial thrust.

An alternative solution provides the use of a washer or sealing ring and annular gasket, better known under the name of Seeger ring. The thrust washer is held in contact against the sealing ring by the Seeger ring. This type of constraint allows the axial thrust to be absorbed from one direction only. The thrust washer and the Seeger ring, as well as the clamping elements, have standard sizes and, therefore, cannot be applied to non-standard shafts and sizes. This limits the possibility of using this constraint system with non-standard items.

Still another solution for constraining the annular element to the shaft provides the presence of two grooves, one on the outer surface of the shaft and the other on the inner surface of the annular element, which by coupling to each other form a concentric channel interposed between the two components. Such a solution is disclosed in DE 10 2009 025 554.

A wire, generally made of steel, is inserted in the channel thus formed. The insertion of the wire inside the entire channel axially blocks the ring relative to the shaft. Instead, the annular element is allowed to rotate around the shaft. However, this type of constraint only prevents the relative axial movements of the two components with respect to one another.

The object of the present invention is to provide a tightening system for annular elements, which overcomes the drawbacks of the described prior art.

Therefore, the object of the present invention is to provide a tightening system for annular elements, which allows the two components to be constrained without creating problems of axial misalignment between the two.

Another object of the present invention is to provide a tightening system for annular elements, which ensures a greater constraint capable of preventing axial displacements and rotations about the axis of the two components.

A further object of the invention is to provide a tightening system for annular elements, which is structurally simple and easy to assemble, and can withstand bidirectional axial thrusts and considerable efforts.

In addition, one object of the present invention is to provide a universal tightening system for annular elements, which, therefore, allows for its adaptation to different sizes of the components with which it will be associated.

Finally, it is an object of the present invention to provide a tightening system for annular elements, which can also be easily disassembled.

These and other objects are substantially achieved by means of a tightening system for annular elements as described in one or more of the accompanying claims.

Further features and advantages will become more apparent from the detailed description of a preferred, but not exclusive, embodiment of a tightening system for annular elements according to the present invention. This description is provided with reference to the accompanying figures, also having a purely exemplary and therefore non-limiting purpose, in which:
- Figure 1 is a schematic sectional side view of an annular element and a central cylindrical body, which are not associated;
- Figure 2 is a schematic, partially sectional side view of the annular element and the central cylindrical body illustrated in Figure 1, which are mutually associated;
- Figure 3 shows a schematic sectional front view of Figure 2, in a first step of insertion of a steel wire to constrain the annular element to the central cylindrical body, according to what is described and claimed in the present invention;
- Figure 4 shows a schematic sectional front view of Figure 2, in a second step of insertion of a steel wire to constrain the annular element to the central cylindrical body, according to what is described and claimed in the present invention, wherein the annular element is rotated with respect to the central cylindrical body;
- Figure 5 shows a side view of what is shown in Figure 4, thus, an intermediate step for the connection of the annular element to the central cylindrical body, wherein the annular element is rotated with respect to the central cylindrical body;
- Figure 6 illustrates a constructional variant of what is shown in Figure 4;
- Figure 7 shows a perspective view of an annular element associated with a central cylindrical body in accordance with what is shown in the present invention.

With reference to the above-described figures, the numeral 1 indicates a system for tightening an annular element to a central cylindrical body in accordance with what is described in the present invention.

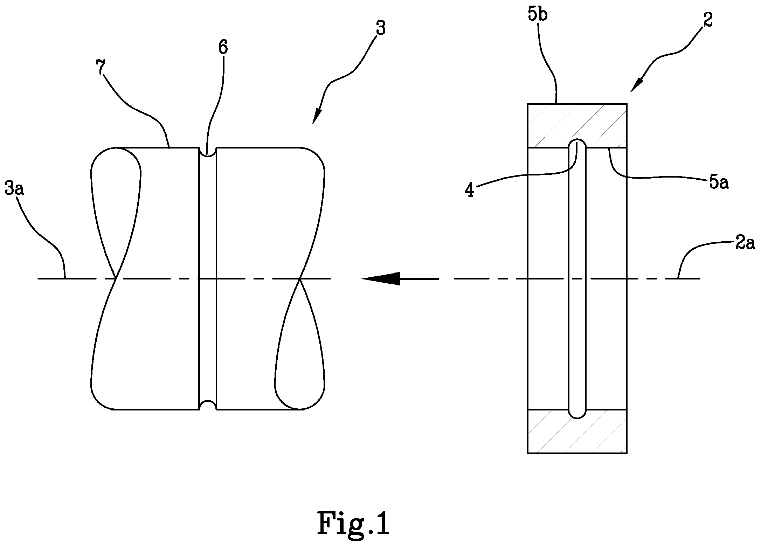

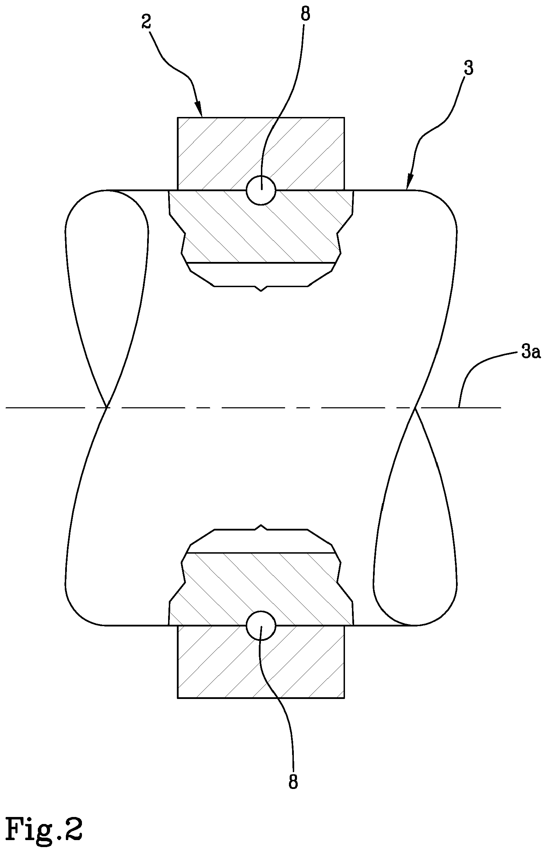

Figure 1 illustrates an annular element 2 and a central cylindrical body 3, which are separated from each other, while Figure 2 shows the same components, which are axially associated.

As can be seen in Figure 1, the annular element 2 has two concentric cylindrical lateral surfaces, an inner one 5a and an outer one 5b.

The tightening system 1 comprises a first annular groove 4 formed on the inner surface 5a of the annular element 2. This first annular groove 4 extends circumferentially on the inner lateral surface of the annular element 2, in an eccentric position with respect to the rotation axis 2a of the annular element 2.

The tightening system 1 also comprises a second annular groove 6 formed externally on the central cylindrical body 3. Specifically, the second annular groove 6 is formed circumferentially on the outer lateral surface 7 of the central cylindrical body 3, in an eccentric position with respect to the rotation axis 3a of the central cylindrical body 3.

The first annular groove 4 and the second annular groove 6 have the same extension in the axial direction.

As shown in Figure 2, when the annular element 2 is fitted on the central cylindrical body 3, until the first groove 4 and the second groove 6 superimpose one another, the coupling of the first groove 4 with the second groove 6 forms a channel 8. The tightening system 1 also comprises interference means 9 adapted to be inserted within the first 4 and the second 6 annular grooves. Specifically, the interference means 9 can be inserted inside the channel 8 created by the coupling of the two annular grooves 4 and 6.

The channel 8 thus formed is contained and interposed between the annular element 2 and the central cylindrical body 3.

The first annular groove 4 and the second annular groove 6 may have a cross section, when viewed in the radial direction with respect to the axis of symmetry, which is curvilinear or polygonal and, consequently, the channel 8 which is formed by the coupling of the two grooves 4 and 6 will have, in the configuration of the first coupling in phase, a circular, square or rectangular cross section, when viewed in the radial direction. In the appended figures, an inner channel 8 and the annular grooves 4 and 6 have always been shown with circular cross-sections, without intending to limit the invention solely to that configuration.

A passage 10 puts in communication the channel 8 contained inside the annular element 2 and the central cylindrical body 3 with the exterior.

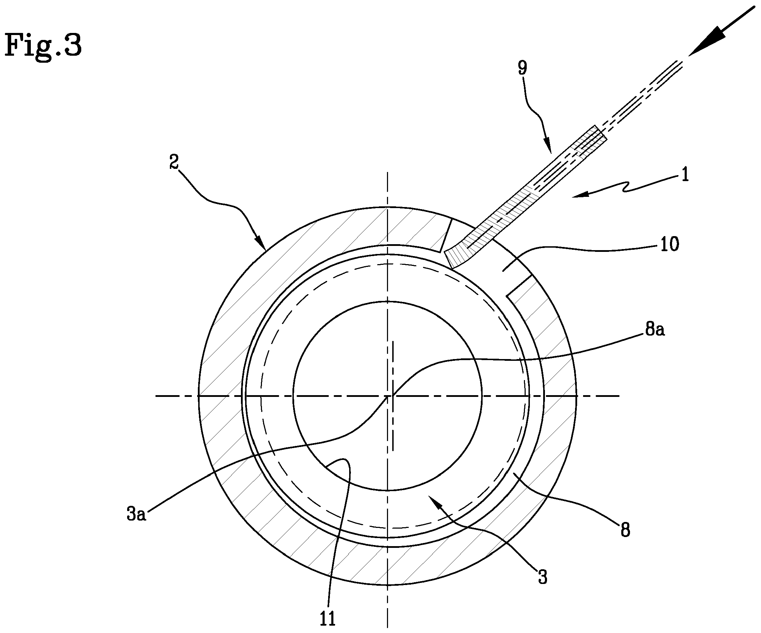

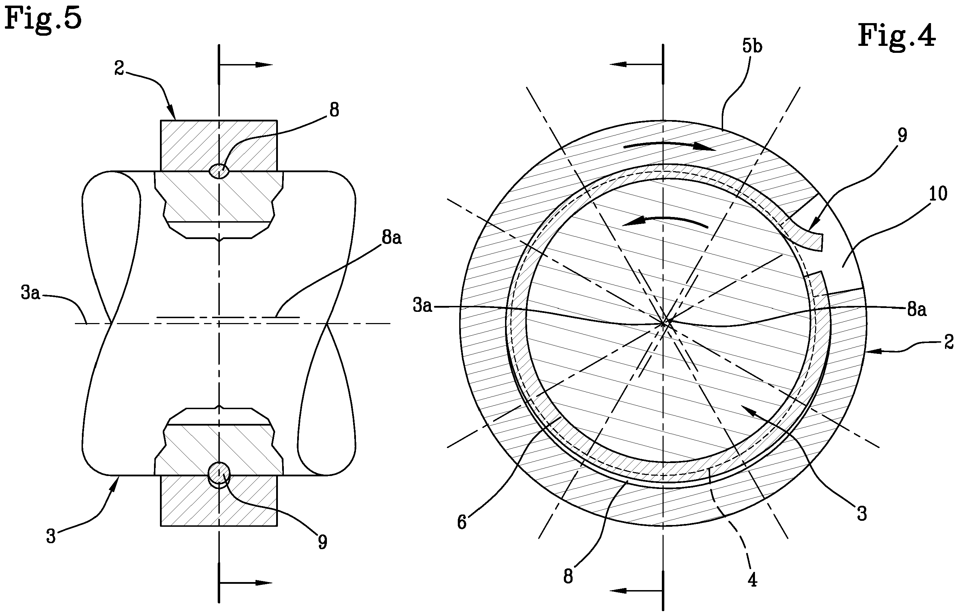

In the configuration shown in Figures 3 and 4, the passage 10 is formed in the annular element 2, throughout its thickness, to put in fluid communication the first annular groove 4 with the outer lateral surface 5b of said annular element 2.

For mechanical or operational requirements, it may not be possible for a passage to be formed on the annular element since, for example, it is necessary to preserve the integrity of the outer surface of the annular element.

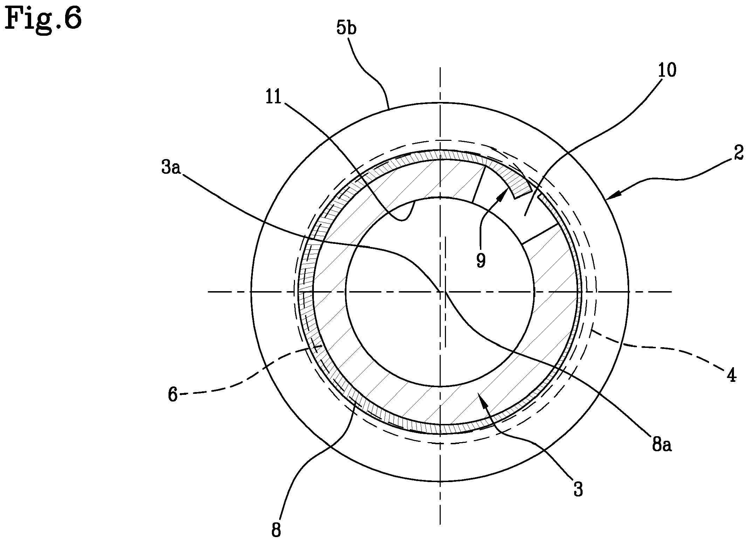

In this case, the passage is formed in the central cylindrical body 3, as shown in Figure 6.

In this case, the central cylindrical body 3 is an internally hollow bar, also known as the shaft sleeve, and the passage 10 is formed through the wall of the central cylindrical body 3, so as to put the second annular groove 6 in fluid communication with the inner circumferential surface 11 of the hollow central cylindrical body 3 (Figure 6).

The interference means 9 comprise a wire. Preferably, this wire is made of steel and has flexibility and compressive strength characteristics.

This steel wire may have a circular or polygonal section. In the preferred circular configuration, it has an outer diameter ranging from 1 to 3 mm, and even more preferably of 2 mm.

Advantageously, the steel wire is a cable having a spiral shape, therefore, it has a plurality of helical windings.

This particular conformation has considerable advantages, first of all that of giving great elasticity to the wire.

Secondly, but not less important, the helical winding conformation offers the possibility to insert a further reinforcing wire inside the cable.

Moreover, the helical winding conformation allows a small screw or a generic small threaded element to be screwed to one of its ends, which allows for connection to the cable by screwing means, so as to pull it out when most appropriate, for example in the case of maintenance or cleaning.

In use, the annular element 2 is axially fitted on the central cylindrical body 3, until it abuts against a stopper 12, such as for example a flange.

The stopper is useful to easily position the annular element 2 in the correct axial position along the central cylindrical body 3, so as to cause the first annular groove 4 to overlap properly on the second annular groove 6 and to fit together so as to form the above-mentioned inner channel 8.

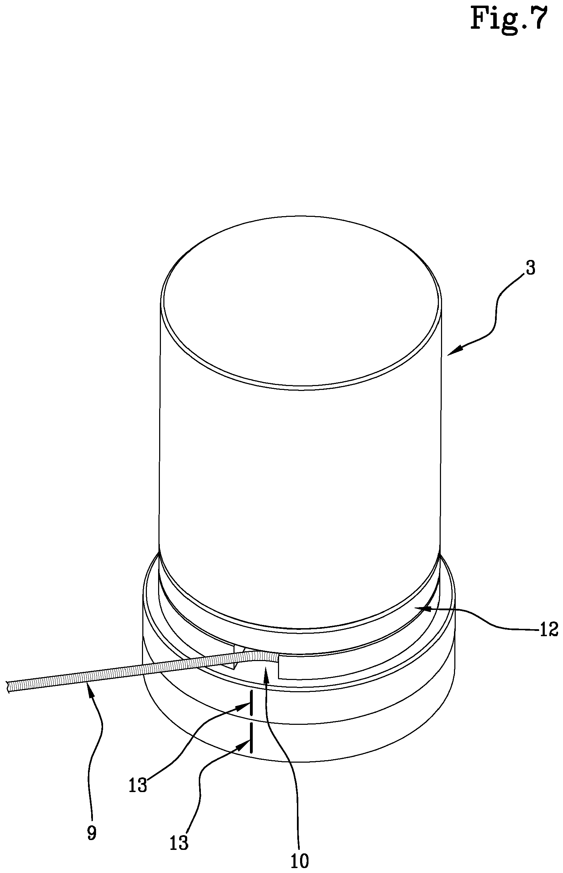

Another very useful visual feedback is given by a pair of reference lines 13 formed on the outer lateral surfaces 5b and 7, respectively, of the annular element 2 and of the central cylindrical body 3 (Figure 7). Each line 13 is oriented along the axis of the respective component: when the two lines 13 are axially aligned, the first annular groove 4 and the second annular groove 6 are mutually in such a position as to create the inner channel 8 having a regular and constant cross section along the entire circumference. In other words, when the two reference lines 13 are aligned, the two grooves 4 and 6 are in phase and the channel 8 has a cross section, as measured in the radial direction, with a regular and constant geometric figure along its entire annular length. In this configuration, for example, the cross section of the channel 8 is constantly circular or constantly square or constantly rectangular depending on the initial geometry of the annular grooves 4 and 6.

Accordingly, when the two lines 13 are axially aligned, the annular element 2 and the central cylindrical body 3 are in phase.

When they are aligned, the axis of the grooves, or axis of the channel, 8a is misaligned with the axis of the diameters 2a of the annular element 2 and of the central cylindrical body 3, as shown in Figure 3.

At this point, the interference means 9, specifically the steel cable, are inserted inside the channel 8 thus created by the two grooves.

At this point, a first constraint has been created, which blocks any axial movement of the annular element 2 relative to the central cylindrical body 3. In other words, the annular element 2 can no longer be removed from the central cylindrical body 3. The axial sliding of the annular element 2 along the axis 3a of the central cylindrical body 3 is thus prevented in both directions.

The eccentricity of the two grooves 4 and 6 creates a tightening system 1 which not only blocks any axial movement between the two bodies 2 and 3, but also prevents the continuous rotation of the annular element 2 about the rotation axis 3a of the central cylindrical body 3.

In other words, when the interference means are inserted inside the channel 8, the annular element 2 is subject to a very first initial rotation, in one direction or the other, about the rotation axis 3a of the central cylindrical body 3, until it is no longer possible to rotate one body around the other.

The same thing happens if the initial rotation occurs in the opposite direction.

The eccentricity of the grooves 4 and 6 blocks the bidirectional rotation of the annular element 2 around the axis 3a of the central cylindrical body 3.

After the cable has been inserted in the grooves 4 and 6 until completely filling the channel 8, the annular element 2 is rotated with respect to the central cylindrical body 3 so as to angularly shift the two grooves 4 and 6. The rotation can occur in both directions.

The shift to which the grooves 4 and 6 are subjected is only of the angular type, since they remain aligned and axially superimposed and maintain their position along the axis of the central cylindrical body 3.

The angular shift of the grooves 4 and 6 causes a change in the cross section of the inner channel 8, modifying its size.

Therefore, a first portion of the channel 8 will have a smaller cross section than the starting cross section, and a second portion of the channel 8 will have a greater cross section than the starting cross section. Along the annular extent, the channel 8 will thus have different, non-regular cross sections, as measured in the radial direction.

As a result of the relative rotation, in one direction or the other according to the functional requirements, between the annular element 2 and the central cylindrical body 3, the channel 8 undergoes a deformation in its various cross sections: in a first portion, the sections will suffer a crushing, in a second portion, they will become larger in size. The interference means 9, specifically the steel cable, remain pinched inside the first portion creating a second constraint that also blocks any rotational movement of the annular element 2 with respect to the central cylindrical body 3 in both directions.

Specifically, once the steel cable is inserted inside the channel 8, the annular element 2 and the central cylindrical body 3 may rotate relative to one another, in both directions, only by an angular excursion of limited amplitude, precisely straddling the phase position, thus straddling the alignment position of the two lines 13. As regards the phase position in which the lines 13 are aligned, the relative rotation of the annular element 2 with respect to the central cylindrical body 3 in each direction is preferably less than 5°.

However, this is a merely indicative value because the amplitude of the rotation also depends on the diameter of the annular element 2 and of the central cylindrical body 3 associated therewith, since the angular degrees cover an arc of a circle which is greater the larger the diameter.

The relative angular excursion between the two components 2 and 3 depends on the geometry of the eccentric grooves, thus on the degree of eccentricity. By suitably designing the geometry of the eccentric grooves, the amplitude of the relative rotation between the annular element 2 and the central cylindrical body 3 can be changed.

To unlock the system, the annular element 2 must be rotated in the opposite direction with respect to the central cylindrical body 3, until bringing the system back in phase, thus until realigning the two lines 13 with each other.

To remove the interference means 9, specifically the spiral-wound steel cable, it is useful to arrange a small screw or a small threaded element that can be screwed to one of the ends of the cable to grasp it and pull it out of the inner channel 8.

The invention described above achieves considerable advantages.

The tightening system thus described has the purpose of keeping the mutually assembled annular element and central cylindrical body locked in an axial position, and preventing relative rotations thereof.

In particular, bidirectional axial movements, as well as bidirectional relative rotations, are blocked.

When the annular element is mounted on a rotating central cylindrical body, then the tightening system also serves as a driving system as well as a locking system against axial thrusts.

When the annular element is mounted on a static central cylindrical body, the tightening system prevents axial movements due to thrusts, which can also be bidirectional, and also serves as an anti-bidirectional rotational mechanism.

## Claims

1. A tightening system for tightening an annular element (2) to a central cylindrical body (3) comprising a central cylindrical body (3), an annular element (2) to be tightened to said central cylindrical body (3), a first annular groove (4) formed circumferentially on an inner surface (5a) of said annular element (2), a second annular groove (6) formed circumferentially on an outer surface (7) of said central cylindrical body (3), interference means (9) adapted to be inserted within said first (4) and said second (6) grooves, said first (4) and said second (6) grooves being able to be coupled to form a channel (8) wherein said interference means (9) can be inserted, **characterized in that** said first groove (4) is eccentric to the rotational axis of symmetry of said annular element (2) and said second groove (6) is eccentric to the rotational axis of symmetry (3a) of said central cylindrical body (3), in such a way that in a first coupling configuration in phase between said annular element (2) and said central cylindrical body (3), said channel (8) presents a cross section, as measured in the radial direction with respect to the symmetry rotational axis (3a), which is constant and uniform along the entire annular extent, and in a second coupling configuration which is rotated, and not in phase between said annular element (2) and said central cylindrical body (3), said channel (8) has a cross section which is not uniform and is variable along the annular extent.

2. A tightening system (1) according to the preceding claim, **characterized in that** it comprises a passage (10) that puts in communication said channel (8) formed by the coupling of said first (4) and said second (6) grooves with the exterior.

3. The tightening system (1) according to claim 2, **characterized in that** said passage (10) is made in said annular element (2) and puts in fluid communication said first groove (4) with the outer circumferential surface (5b) of said annular element (2).

4. The tightening system (1) according to claim 2, **characterized in that** said passage (10) is made in said central cylindrical body (3) and puts in fluid communication said second groove (6) with the inner circumferential surface (11) of said central cylindrical body (3).

5. A tightening system (1) according to one of the preceding claims, **characterized in that** said interference means (9) are flexible and resistant to compression.

6. The tightening system (1) according to the preceding claim, **characterized in that** said interference means (9) include a steel wire.

7. The tightening system (1) according to claim 6, **characterized in that** said interference means (9) include a cable having the shape of an elastic spiral.

8. A tightening system (1) according to one of claims 5 or 6, **characterized in that** said steel wire has a diameter ranging from 1 to 3 mm, preferably of 2 mm.

9. A method for tightening an annular element (2) to a central cylindrical body (3) comprising the steps of:
- providing an annular element (2) comprising, circumferentially on an inner surface (5a), a first eccentric annular groove (4);
- arranging a central cylindrical body (3) comprising, circumferentially on an outer surface (7), a second eccentric annular groove (6);
- inserting said central cylindrical body (3) in said annular element (2), such that said first (4) and said second (6) grooves, both eccentric, are aligned axially and angularly to form a channel (8) with a constant circular section;
- inserting inside the channel (8) thus formed interference means (9) adapted to completely fill the channel (8);
- rotating said annular element (2) relative to said central cylindrical body (3) so as to angularly shift said first (4) and second (6) grooves, causing a change in the cross section of said channel (8) due to the eccentricity of the two grooves (4, 6).

## Patentansprüche

1. Befestigungssystem zum Befestigen eines Ringelements (2) an einem mittigen zylindrischen Körper (3), umfassend einen mittigen zylindrischen Körper (3), ein Ringelement (2), das am mittigen zylindrischen Körper (3) zu befestigen ist, eine erste Ringnut (4), die umfangseitig an einer inneren Oberfläche (5a) des Ringelements (2) ausgebildet ist, eine zweite Ringnut (6), die umfangseitig an einer äußeren Oberfläche (7) des mittigen zylindrischen Körpers (3) ausgebildet ist, Interferenzmittel (9), die ausgelegt sind, um in die erste (4) und die zweite (6) Nut eingefügt zu werden, wobei die erste (4) und die zweite Nut (6) in der Lage sind, gekuppelt zu werden, um einen Kanal (8) zu bilden, in den die Interferenzmittel (9) eingefügt werden können, **dadurch gekennzeichnet, dass** die erste Nut (4) außermittig zur Symmetrierotationsachse des Ringelements (2) angeordnet ist und die zweite Nut (6) außermittig zur Symmetrierotationsachse (3a) des mittigen zylindrischen Körpers (3) angeordnet ist, sodass der Kanal (8) in einer ersten Kupplungskonfiguration phasengleich zwischen dem Ringelement (2) und dem mittigen zylindrischen Körper (3) einen Querschnitt, gemessen in radialer Richtung zur Symmetrierotationsachse (3a), aufweist, der entlang der gesamten ringförmigen Ausdehnung konstant und einheitlich ist, und der Kanal (8) in einer zweiten Kupplungskonfiguration, die gedreht und nicht phasengleich zwischen dem Ringelement (2) und dem mittigen zylindrischen Körper (3) ist, einen Querschnitt aufweist, der entlang der ringförmigen Ausdehnung nicht einheitlich und variabel ist.

2. Befestigungssystem (1) nach dem vorhergehenden Anspruch, **dadurch gekennzeichnet, dass** es einen Durchgang (10) umfasst, der den durch die Kupplung der ersten (4) und der zweiten (6) Nut gebildeten Kanal (8) mit der Außenseite in Kommunikation bringt.

3. Befestigungssystem (1) nach Anspruch 2, **dadurch gekennzeichnet, dass** der Durchgang (10) im Ringelement (2) ausgebildet ist und die erste Nut (4) mit der äußeren umfangseitigen Oberfläche (5b) des Ringelements (2) in Kommunikation bringt.

4. Befestigungssystem (1) nach Anspruch 2, **dadurch gekennzeichnet, dass** der Durchgang (10) im mittigen zylindrischen Körper (3) ausgebildet ist und die zweite Nut (6) mit der inneren umfangseitigen Oberfläche (11) des mittigen zylindrischen Körpers (3) in Kommunikation bringt.

5. Befestigungssystem (1) nach einem der vorhergehenden Ansprüche, **dadurch gekennzeichnet, dass** die Interferenzmittel (9) flexibel und druckfest sind.

6. Befestigungssystem (1) nach dem vorhergehenden Anspruch, **dadurch gekennzeichnet, dass** die Interferenzmittel (9) einen Stahldraht umfassen.

7. Befestigungssystem (1) nach Anspruch 6, **dadurch gekennzeichnet, dass** die Interferenzmittel (9) ein Kabel umfassen, aufweisend die Form einer elastischen Spirale.

8. Befestigungssystem (1) nach einem der Ansprüche 5 oder 6, **dadurch gekennzeichnet, dass** der Stahldraht einen Durchmesser von 1 bis 3 mm, vorzugsweise von 2 mm aufweist.

9. Verfahren zum Befestigen eines Ringelements (2) an einem mittigen zylindrischen Körper (3), umfassend die folgenden Schritte:
- Bereitstellen eines Ringelements (2), umfassend umfangseitig an einer inneren Oberfläche (5a) eine erste außermittige Ringnut (4);
- Anordnen eines mittigen zylindrischen Körpers (3), umfassend umfangseitig an einer äußeren Oberfläche (7) eine zweite außermittige Ringnut (6);
- Einfügen des mittigen zylindrischen Körpers (3) in das Ringelement (2), sodass die erste (4) und die zweite (6) Nut, die beide außermittig sind, axial und winkelig so ausgerichtet sind, dass sie einen Kanal (8) mit einem konstanten kreisförmigen Querschnitt formen;
- Einfügen der so geformten Interferenzmittel (9) in den Kanal (8), die ausgelegt sind, um den Kanal (8) komplett zu füllen;
- Drehen des Ringelements (2) relativ zum mittigen zylindrischen Körper (3), sodass die erste (4) und die zweite (6) Nut winkelig verschoben werden und aufgrund des Mittenversatzes der zwei Nuten (4, 6) eine Veränderung des Querschnitts des Kanals (8) verursachen.

## Revendications

1. Système de fixation servant à fixer un élément annulaire (2) à un corps cylindrique (3) central comprenant un corps cylindrique (3) central, un élément annulaire (2) à fixer sur ledit corps cylindrique (3) central, une première rainure annulaire (4) formée sur la circonférence sur une surface intérieure (5a) dudit élément annulaire (2), une seconde rainure annulaire (6) formée sur la circonférence sur une surface extérieure (7) dudit corps cylindrique (3) central, des moyens d'interférence (9) pouvant être introduits à l'intérieur desdites première (4) et seconde (6) rainures, lesdites première (4) et seconde (6) rainures pouvant être accouplées pour former un canal (8) dans lequel lesdits moyens d'interférence (9) peuvent être introduits, **caractérisé en ce que** ladite première rainure (4) est excentrique par rapport à l'axe de rotation de symétrie dudit élément annulaire (2) et ladite seconde rainure (6) est excentrique par rapport à l'axe de rotation de symétrie (3a) dudit corps cylindrique (3) central, de sorte que dans une première configuration d'accouplement en phase entre ledit élément annulaire (2) et ledit corps cylindrique (3) central, ledit canal (8) présente une section transversale, telle que mesurée dans la direction radiale par rapport à l'axe de rotation de symétrie (3a), étant constante et uniforme le long de toute l'extension annulaire, et dans une seconde configuration d'accouplement étant pivotée, et pas en phase entre ledit élément annulaire (2) et ledit corps cylindrique (3) central, ledit canal (8) comporte une section transversale n'étant pas uniforme et étant variable le long de l'extension annulaire.

2. Système de fixation (1) selon la revendication précédente, **caractérisé en ce qu'**il comprend un passage (10) mettant en communication ledit canal (8) formé par l'accouplement desdites première (4) et seconde (6) rainures avec l'extérieur.

3. Système de fixation (1) selon la revendication 2, **caractérisé en ce que** ledit passage (10) est réalisé dans ledit élément annulaire (2) et met en communication fluidique ladite première rainure (4) avec la surface de circonférence (5b) extérieure dudit élément annulaire (2) .

4. Système de fixation (1) selon la revendication 2, **caractérisé en ce que** ledit passage (10) est réalisé dans ledit corps cylindrique (3) central et met en communication fluidique ladite seconde rainure (6) avec la surface de circonférence (11) intérieure dudit corps cylindrique (3) central.

5. Système de fixation (1) selon l'une des revendications précédentes, **caractérisé en ce que** lesdits moyens d'interférence (9) sont flexibles et résistants à la compression.

6. Système de fixation (1) selon la revendication précédente, **caractérisé en ce que** lesdits moyens d'interférence (9) incluent un fil en acier.

7. Système de fixation (1) selon la revendication 6, **caractérisé en ce que** lesdits moyens d'interférence (9) incluent un câble ayant la forme d'une spirale élastique.

8. Système de fixation (1) selon l'une des revendications 5 ou 6, **caractérisé en ce que** ledit fil d'acier a un diamètre compris entre 1 et 3 mm, de préférence de 2 mm.

9. Procédé de fixation d'un élément annulaire (2) à un corps cylindrique (3) central comprenant les étapes de :
- prévoir un élément annulaire (2) comprenant, sur la circonférence sur une surface intérieure (5a), une première rainure annulaire (4) excentrique ;
- disposer un corps cylindrique (3) central comprenant, sur la circonférence sur une surface extérieure (7), une seconde rainure annulaire (6) excentrique ;
- introduire ledit corps cylindrique (3) central dans ledit élément annulaire (2), de sorte que lesdites première (4) et seconde (6) rainures, toutes deux excentriques, soient alignées axialement et angulairement pour former un canal (8) à section circulaire constante ;
- introduire à l'intérieur du canal (8) ainsi formé des moyens d'interférence (9) adaptés pour remplir complètement le canal (8) ;
- faire tourner ledit élément annulaire (2) par rapport au dit corps cylindrique (3) central de manière à déplacer angulairement lesdites première (4) et seconde (6) rainures, en provoquant une modification dans la section transversale dudit canal (8) en raison de l'excentricité des deux rainures (4, 6).
